Europäisches Patentamt

European Patent Office

Office européen des brevets

(19)

(11) **EP 1 138 377 A1**

(12) ## DEMANDE DE BREVET EUROPEEN

(43) Date de publication:
**04.10.2001 Bulletin 2001/40**

(51) Int Cl.[7]: **B01J 20/10**, B01J 20/18, B01J 20/28, B01D 53/04

(21) Numéro de dépôt: **01400651.4**

(22) Date de dépôt: **13.03.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **27.03.2000 FR 0003831**

(71) Demandeur: **CECA S.A.**
**92800 Puteaux (FR)**

(72) Inventeur: **Plee, Dominique**
**64140 Lons (FR)**

(74) Mandataire: **Treuil, Claude et al**
**Atofina**
**Département Propriété Industrielle**
**4-8 cours Michelet**
**La Défense 10**
**92091 Paris La Défense Cedex (FR)**

(54) **Méthode de séparation de molecules en phase gazeuse par adsorption au moyen d'adsorbants inorganiques solides agglomérés à distribution mésoporeuse étroite et calibrée**

(57) La présente invention a trait à une nouvelle famille de solides inorganiques à distribution mésoporeuse étroite et calibrée qui sont agglomérés avec un liant ; ces solides peuvent avantageusement être utilisés comme adsorbants pour la séparation industrielle de composés en phase gazeuse ayant des points d'ébullition différents.

**EP 1 138 377 A1**

## Description

Domaine de l'invention

Cette invention a trait à une nouvelle famille d'adsorbants à base de solide inorganique à distribution mésoporeuse étroite et calibrée et agglomérés avec un liant ; ces adsorbants sont destinés à la séparation de composés en phase gazeuse ayant des points d'ébullition différents.

Art antérieur

La technologie de l'adsorption est de plus en plus utilisée industriellement, par exemple pour éliminer des composés organiques présents en faible teneur dans un courant gazeux ou liquide ; elle a pour avantage d'être souvent moins coûteuse que d'autres solutions industrielles connues, en particulier lorsque de forts volumes contenant des impuretés ou traces à faible concentration doivent être traités et/ou purifiés. Le plus souvent, un système fonctionne avec au moins deux colonnes remplies d'adsorbant, chaque colonne travaillant alternativement en adsorption et en désorption destinée à régénérer l'adsorbant. Le développement de cette technologie est amené à se développer étant donné l'accroissement des réglementations relatives à l'émission de VOC (mis pour Volatile Organic Compounds, en français Composés Organiques Volatils), molécules qui se rencontrent dans toutes les branches de l'industrie chimique et peuvent être des molécules chlorées, oxygénées comme les cétones ou appartenir à la famille des aromatiques ; l'USEPA (United States Environmental Protection Agency) définit les VOC comme des composés stables ayant une pression de vapeur supérieure à 0,1 mm Hg (13,33 Pa) dans des conditions normales de température et de pression.

La technologie la plus courante pour adsorber les VOC en phase gaz consiste à utiliser une colonne remplie de charbon actif sur laquelle on fait passer le fluide à traiter. Lorsque la concentration du polluant en sortie de colonne atteint une valeur déterminée, on opère une régénération soit par la vapeur d'eau à température proche de 150-200 °C, soit par un vide partiel (technologie de type VRU mis pour Volatile Recovery Unit, en français Unité de Récupération de composés Volatils). Dans le cas de solvants non miscibles à l'eau, la méthode de régénération du charbon actif à la vapeur d'eau est particulièrement intéressante car elle permet de récupérer par décantation la ou les espèces organiques. Cependant, il est connu que l'utilisation de charbons actifs présente certains inconvénients tels que le bouchage partiel des pores par polymérisation de VOC réactifs, polymérisation catalysée par les cendres de surface du charbon ; le charbon actif peut également présenter des risques d'inflammation en présence de molécules oxygénées lorsque des chaleurs d'adsorption importantes sont en jeu. Enfin, la régénération du charbon actif étant rarement complète, sa capacité diminue donc au fil des cycles, ce qui oblige l'opérateur industriel à remplacer le charbon actif quand sa capacité d'adsorption est devenue trop faible. Ces inconvénients ont incité les industriels à trouver des solutions de remplacement : les zéolites hydrophobes développées à cette occasion, par exemple les zéolites ZSM-5, ont permis d'éviter certains des désavantages liés à l'utilisation de charbon actif, en particulier les risques liés à l'inflammabilité (Blocki, S.W. *Environ. Prog.* 1993, *12*, p. 226-230). Mais leur prix beaucoup plus élevé et leur capacité d'adsorption plus faible que ceux du charbon actif sont un frein à leur développement industriel et il existe donc un besoin d'adsorbants industriels de coût modéré et de capacité d'adsorption comparable à celle du charbon actif tout en ne présentant pas sa dangerosité de manipulation et ayant une capacité de régénération supérieure.

Une famille de composés inorganiques mésoporeux à distribution étroite et calibrée des mésopores comprenant notamment une silice mésoporeuse dont la synthèse a été décrite pour la première fois en 1969 par Sylvania Electric Products Inc dans le brevet US 3.556.725, famille dont les composés (alumino)siliciques et plus particulièrement le composé MCM 41 (pour Mobil Composition Of Matter 41) dont on trouve un procédé de synthèse dans Nature, 1992, vol 359, pp.710-712 ont été très étudiés par Mobil au début des années 1990 et ont fait l'objet de nombreux brevets et articles scientifiques, est maintenant bien connue à l'échelle du laboratoire tant au niveau de la structure poreuse, des conditions de synthèse que des applications possibles comme catalyseur et/ou comme adsorbant. Dans «VOC Removal : Comparison of MCM 41 with Hydrophobic Zeolites and Activated Carbon » de X.S. Zhao, Energy and Fuels, 1998, on trouve une étude comparative concernant les propriétés d'adsorption et de désorption respectives des charbons actifs, zéolites hydrophobes et MCM 41 en poudre pour l'élimination des VOC. A partir du seul tracé des isothermes du benzène, de l'hexane et du tétrachlorure de carbone, les auteurs concluent que les solides MCM 41, du fait de leur volume mésoporeux important, nettement supérieur à celui des zéolites hydrophobes, pourraient constituer des adsorbants intéressants pour l'élimination de VOC présents à haute concentration dans des flux gazeux à forte humidité mais ne sont susceptibles d'adsorber les VOC à faible concentration que par un post-traitement destiné à modifier le diamètre d'ouverture de leurs pores. De plus, les auteurs montrent que la désorption peut éventuellement s'effectuer à plus basse température que pour les autres adsorbants (de l'ordre de 60 °C au lieu de 100 °C).

L'adsorption de molécules organiques de petite taille (méthanol, butanol, toluène) sur MCM 41 à taux d'aluminium variable et aggloméré par frittage a été étudiée par T. Boger et al (« Influence of the aluminum content on the adsorptive properties of MCM 41, Mesoporous Materials, *8* ,1997 , p. 79-91) ; les auteurs montrent que l'adsorption des molécules organiques n'est pratiquement pas influencée par la teneur en aluminium du MCM 41, ce qui leur laisse penser à un mécanisme de condensation capillaire, mais aussi que l'adsorption des molécules organiques est d'autant plus défavorablement influencée que les pressions de frittage sont élevées. L'adsorption de l'eau est faible et a tendance à augmenter lorsque le rapport Si/Al diminue ; elle reste dans tous les cas faible et partiellement irréversible, l'adsorbant peut être considéré comme ayant une surface hydrophobe. Les auteurs en concluent que ces adsorbants pourraient être utilisés en atmosphère humide pour l'élimination des VOC présents dans des flux gazeux à des concentrations moyennes à élevées mais devraient être associés à une zéolite hydrophobe pour obtenir un degré d'épuration élevé, la zéolite hydrophobe adsorbant quant à elle les VOC présents à faible concentration. L'irréversibilité partielle de l'adsorption de l'eau est confirmée par d'autres auteurs (« Adsorption Studies on Ordered Mesoporous Materials « de J.Janchen , Prog. In Zeolite and Microporous Materials, Studies in Surface Science and Catalysis, vol. 105, 1997, p. 1731.

Des cycles d'adsorption et de désorption de toluène et de 2-propanol ont été réalisés sur MCM 41 en poudre et comparés avec ceux obtenus sur une zéolite hydrophobe de type ZSM 5 (« Pressure Swing Adsorption of Organic Solvent Vapors on Mesoporous Silica Molecular Sieves « de S. Namba et al., Prog. In Zeolite and Microporous Materials, Studies in Surface Science and Catalysis , vol. 105, 1997, p. 1891). Les auteurs notent une meilleure capacité de travail du solide mésoporeux ainsi qu'une plus faible activité catalytique que celle de la zéolite hydrophobe dans la déshydratation du propanol et concluent qu'un procédé de type PSA pourrait permettre de récupérer des vapeurs de toluène ou de propanol bien qu'ils aient réalisé leurs expériences à iso-pression en désorbant sous azote.

Toutes les conclusions de ces articles et brevets cités ci-dessus sont basés sur des essais de laboratoire sur des produits en poudre tels qu'issus de la synthèse hydrothermale et dont la mise en oeuvre dans des installations industrielles n'est pas envisageable étant donné les inconvénients liés à la manipulation et à l'utilisation de matériaux pulvérulents.

Description de l'invention :

La présente invention propose une nouvelle famille d'adsorbants industriels utilisables dans des procédés d'adsorption en phase gazeuse fonctionnant cycliquement et plus particulièrement pour l'adsorption de molécules organiques VOC présentes dans des flux gazeux même à faible concentration.

Par rapport aux autres adsorbants industriels connus pour l'adsorption des VOC en phase gazeuse, à savoir charbon actif et zéolite hydrophobe, cette nouvelle famille d'adsorbants présente de nombreux avantages et notamment :

* capacité de désorption des VOC adsorbés importante
* régénération de l'adsorbant aisée
* séparation des VOC adsorbés en fonction de leur point d'ébullition
* absence d'inflammabilité de l'adsorbant
* manipulation de l'adsorbant aisée.

En outre, cette nouvelle famille d'adsorbants permet de séparer très efficacement des composés ayant des points d'ébullition différents.

Les adsorbants de la présente invention sont des solides inorganiques poreux à distribution mésoporeuse étroite et calibrée de granulométrie moyenne en général comprise entre 1 et 10 mm. Par solides poreux à distribution mésoporeuse étroite et calibrée selon l'invention, on entend des solides qui sont susceptibles d'adsorber plus de 7,5 %, et de préférence plus de 10 %, en poids de toluène sous une pression relative de 0,5 à 25°C, présentant un volume mésoporeux supérieur ou égal à 0,09 cm$^3$/g, dont au moins 90 % du volume poreux total a un diamètre supérieur à 20 Å et dont au moins 90 % de la porosité est distribuée autour du diamètre moyen à plus ou moins 5 Å et qui comprennent :

* de 50 à 95 parties en poids (comptées en équivalent calciné) d'un solide inorganique poreux, dénommé MTS (pour Micelle Templated Silica, en français silice structurée par des micelles), susceptible d'adsorber plus de 15 % en poids de toluène sous une pression relative de 0,5 à 25°C, présentant un volume mésoporeux supérieur ou égal à 0,18 cm$^3$/g, de distribution mésoporeuse étroite et calibrée, c'est-à-dire dont au moins 90 % du volume poreux total a un diamètre supérieur à 20 Å et dont au moins 90 % de la porosité est distribuée autour du diamètre moyen à plus ou moins 5 Å,
* de 50 à 5 parties en poids d'un liant inerte (au sens de l'adsorption).

Par diamètre moyen, on entend la valeur du diamètre de pores correspondant au maximum du pic de la distribution granulométrique du MTS.

Les volumes poreux indiqués ci-dessus sont mesurés par la méthode DFT (pores cylindriques).

Les solides inorganiques à distribution mésoporeuse étroite et calibrée selon l'invention préférés ont une composition chimique que l'on peut représenter empiriquement par la formule :

$$(Si_x \, Al \, (_{1-x}) \, H(_{1-x})O_2 \quad \text{avec } 0 \leq 1-x \leq 0,3.$$

Ces solides peuvent par exemple être préparés par cristallisation d'un mélange réactionnel contenant une source de silice, un agent mobilisateur de la silice comme la soude, éventuellement un peu d'aluminium, un tensioactif agissant comme agent calibreur de pores (*directing agent* en anglais) et un solvant, éventuellement en présence d'un agent gonflant qui se solubilise dans les micelles, de préférence le triméthylbenzène.

A titre d'exemples d'agents calibreurs de pores, on citera tout particulièrement les tensioactifs contenant des ions ammonium ou phosphonium quaternaires, substitués par des groupements aryle ou alkyle ayant de 6 à 36 atomes de carbone, identiques ou différents, auxquels sont associés à des anions hydroxydes, halogénures ou silicates et notamment ceux qui contiennent des ions cétyltriméthylammonium, cétyltriméthylphosphonium, octadécyltriméthylammonium, octadécyltriméthylphosphonium, benzyltriméthylammonium, cétylpyridinium, décyltriméthylammonium, diméthyldidodécylammonium, triméthyldodécylammonium ainsi que les amines comme la dodécylamine et l'hexadécylamine.

Le solvant peut être organique mais est de préférence aqueux.

Le pH du mélange réactionnel n'est en général pas critique et peut varier entre 1 et 14. La cristallisation du solide peut être mise en oeuvre sous agitation ou non. La température de cristallisation est en général comprise entre la température ambiante et 200 °C et la durée de la réaction de cristallisation peut en général aller de quelques minutes à quelques jours. Une interprétation couramment admise par de nombreux auteurs est qu'en milieu basique, la silice s'organise autour des micelles du tensioactif par interaction entre la tête cationique du tensioactif et les groupements silanols ionisés qui se trouvent en surface de la silice. Selon les conditions opératoires utilisées, il est possible de faire varier les distances entre les pores ou épaisseurs de pores. Par exemple, le pH permet de faire varier l'épaisseur des parois.

A l'issue de l'étape de cristallisation proprement dite, on obtient un gel en solution ou en suspension dans le solvant que l'on filtre, lave et sèche ; le produit obtenu se présente, après calcination, destinée à éliminer le tensioactif par combustion, sous forme d'un solide inorganique pulvérulent possédant des pores de taille régulière et pouvant être de symétrie cubique ou hexagonale selon les conditions de synthèse. Dans le cas d'une symétrie hexagonale, les pores sont tous parallèles.

Pour préparer les adsorbants industriels selon l'invention, il est nécessaire d'agglomérer, en présence d'eau, selon les techniques bien connues (extrusion, granulation), le MTS avec un liant (inerte au sens de l'adsorption), choisi par exemple parmi les argiles telles que montmorillonite, attapulgite, kaolinite, sépiolite, les silices, les oxydes de titane, de zirconium.

Dans le cas d'agglomération par extrusion, on préfère également ajouter un additif d'extrusion, de préférence la carboxyméthylcellulose. Les quantités d'eau (et d'additif d'extrusion) sont ajustées de manière à ce que la pression d'extrusion mesurée au niveau du contact pâte/piston ou vis soit supérieure ou égale à 5 MPa. La granulométrie des adsorbants ainsi agglomérés est typiquement comprise entre 1 et 10 mm.

Après cette mise en forme, le produit est soumis à une calcination à une température d'au moins 400 °C et on obtient un adsorbant selon l'invention tel que défini plus haut.

La présente invention a également pour objet un procédé industriel pour séparer les composants d'un mélange constitué d'au moins 2 composés gazeux différents fonctionnant de manière cyclique et mettant en oeuvre les MTS agglomérés définis plus haut. Le procédé mis au point par la demanderesse comprend les étapes suivantes fonctionnant alternativement qui sont détaillées ci-après :

a/ faire passer ledit mélange gazeux dans une zone d'adsorption contenant le MTS aggloméré et récupérer soit le ou les composés ayant le plus bas point d'ébullition soit un mélange gazeux enrichi en composé(s) ayant le plus bas point d'ébullition en sortie de ladite zone d'adsorption,
b/ désorber le ou les composés adsorbés dans la zone d'adsorption,
c/ régénérer la zone d'adsorption de manière à lui restaurer sa capacité d'adsorption.

L'étape de régénération c/ est réalisée par des moyens de vide (aspiration), par purge de la zone d'adsorption avec un ou plusieurs gaz inerte(s) et/ou avec le flux gazeux obtenu en sortie de la zone d'adsorption, par augmentation de température ou par combinaison des régénérations par aspiration, par purge et/ou variation de température.

Les procédés préférés par la demanderesse sont de type PSA ou VSA, de type TSA ou d'une combinaison de ces différents types de procédés (PTSA).

Parmi les procédés de type PSA ou VSA, on préfère ceux dont l'étape de désorption b/ est effectuée par abaissement de la pression partielle en composés adsorbés au sein de ladite zone d'adsorption suivie d'une remontée en pression de ladite zone d'adsorption par introduction d'un courant du composé à bas point d'ébullition ou du mélange gazeux enrichi en composé à bas point d'ébullition, à contre-courant ou à co-courant (étape c/)

Parmi les procédés de type TSA, on préfère ceux dont l'étape de désorption b/ est effectuée par augmentation de la température de la zone d'adsorption par rapport à température de l'étape a/.

Parmi les procédés de type PTSA, on préfère ceux dont l'étape de désorption b/ est effectuée par augmentation de la température de la zone d'adsorption par rapport à la température de l'étape a/ et par abaissement de la pression partielle en composés adsorbés au sein de ladite zone d'adsorption suivie d'une remontée en pression de ladite zone d'adsorption par introduction d'un courant du composé à bas point d'ébullition ou du mélange gazeux enrichi en composé à bas point d'ébullition, à contre-courant ou à co-courant (étape c/)

Les procédés selon l'invention sont particulièrement bien adaptés pour la séparation de VOC présents même à très faible concentration dans des flux gazeux de préférence à base d'air sec ou humide.

Ils sont également bien adaptés pour la purification d'hydrocarbures particulièrement d'hydrocarbures oxygénés et encore plus spécifiquement d'hydrocarbures appartenant au groupe des cétones, des aldéhydes, des acides ou des alcools, en mélange avec des composés, de préférence à l'état d'impuretés ou de traces.

L'application de MTS en poudre à l'élimination de molécules polyaromatiques d'une phase gaz, telle qu'un gaz de réforming est décrite dans le brevet US 5.583.277 ; l'adsorption se fait à température relativement élevée, dans un domaine thermique où les plus petites molécules ne s'adsorbent pas, le principe étant donc de séparer de grosses molécules d'autres plus petites.

Exemple 1 (préparation d'un solide inorganique mésoporeux à distribution étroite et calibrée des mésopores)

On prépare une solution aqueuse de tensioactif en dissolvant 29,4 g de NORAMIUM MS 50 (solution aqueuse à 50 % en matière active de chlorure de triméthylcétylammonium (C16+ en abrégé) commercialisée par la société CECA) dans 140 g d'eau puis une seconde solution aqueuse en mélangeant 5,2 g de pastilles de soude et 65 g d'eau et en ajoutant sous agitation 122 g de silicate de sodium. Puis on ajoute en 20 minutes à la solution de tensioactif portée à 60°C et placée sous agitation, la solution de silicate en maintenant la température du mélange à 60°C ; on neutralise ensuite partiellement au moyen d'une solution aqueuse d'acide sulfurique (composée de 16 g de $H_2SO_4$ et de 40 g d'eau) sous forte agitation et on porte le mélange à 100°C sous légère agitation pendant 16 heures.

On obtient un gel dont la composition calculée est la suivante :

0,12 $Na_2O$ ; 0,3 $Na_2SO_4$ ; 1 $SiO_2$ ; 0,085 C16+ ; 35$H_2O$

On procède ensuite à la filtration puis au lavage du gel au moyen de 6 litres d'eau et enfin à un séchage à 80°C pendant une nuit. On récupère ainsi 44 g de solide pulvérulent ayant une perte au feu de 48 % et dont le diamètre moyen mesuré par DFT est de 35 Å. On dénomme dans ce qui suit ce solide MTS 35.

Exemple 2 (préparation d'un solide inorganique mésoporeux à distribution étroite et calibrée des mésopores)

On prépare une solution aqueuse de tensioactif en dissolvant 33,6 g de NORAMIUM MC 50 (solution aqueuse à 50 % en matière active de chlorure de triméthyldodécylammonium (C12+ en abrégé) commercialisée par la société Ceca) dans 96 g d'eau puis une 2$^{nde}$ solution aqueuse en ajoutant 24,5 g de pastilles de soude à 88 g d'eau et en ajoutant à cette solution 150 g de silicate de sodium (25,5 % $SiO_2$ ; 7,75 % $Na_2O$) sous agitation. On porte la solution de tensioactif à 60°C puis on ajoute sous agitation la solution de silicate en 15 minutes. On neutralise ensuite partiellement au moyen d'une solution d'acide sulfurique (35,9 g de $H_2SO_4$ et 170g d'eau ) sous forte agitation et on porte le mélange à 50°C sous légère agitation pendant 20 heures.

La composition du gel est :

0,22$Na_2O$ ; 0,55 Na2$SO_4$ ;1$SiO_2$ ; 0,1C12+ ; 40 $H_2O$.

On procède à une filtration, un lavage avec 7 litres d'eau et un séchage a 80°C pendant une nuit. On récupère ainsi 46,5 g de solide ayant une perte au feu de 47,4 % et dont le diamètre moyen mesuré par DFT est 25 Å; ce solide est dénommé MTS 25.

Exemple 3 (préparation de 2 adsorbants selon l'invention)

Les poudres obtenues aux exemples 1 et 2 sont mises en forme par agglomération en mélangeant les poudres avec un liant argileux et un agent rétenteur d'eau tel que la carboxyméthylcellulose destiné à faciliter la mise en forme et suivi de l'extrusion du mélange. La teneur en liant exprimée comme le rapport entre poids de liant et poids total (liant + MTS) est de 20%.

Les extrudés ainsi obtenus sont ensuite cassés pour que leur longueur moyenne soit égale à environ 4 à 5 mm puis ils sont séchés et calcinés à 550°C pendant 2 heures sous air. Les principales caractéristiques des adsorbants selon l'invention ainsi obtenus sont indiquées ci-dessous :

| Type de MTS | MTS 25 | MTS 35 |
|---|---|---|
| Volume poreux par adsorption de toluène (25°C - P/Ps=0,5) ($cm^3$/g) | 0,49 | 0,48 |
| Surface BET ($m^2$/g) | 891 | 700 |
| Volume poreux par adsorption de $N_2$ à 77°K (< 100 Å) ($cm^3$/g) | 0,66 | 0,62 |
| Diamètre moyen par adsorption de $N_2$ à 77°K (DFT) (Å) | 25 | 35 |

Par l'application de la méthode DFT et du modèle à pores cylindriques de Broekhof - de Boer qui permet d'accéder à la distribution poreuse, on constate également que la majorité du volume poreux est majoritairement distribué autour du diamètre moyen plus ou moins 5 Å.

Exemple 4 (capacité d'adsorption en toluène de plusieurs adsorbants )

On réalise un montage d'adsorption permettant d'évaluer le comportement des matériaux préparés à l'exemple 3. Ce montage comprend :

- deux évaporateurs balayés par un courant d'azote et contenant soit un solvant, soit de l'eau
- une colonne d'adsorption de 1,4 cm de diamètre et 50 cm de hauteur
- un chromatographe en phase gazeuse pour analyser la composition en sortie de colonne.

Le flux d'azote chargé en solvant (et éventuellement en eau par le passage dans les évaporateurs) traverse la colonne de bas en haut. Dans les cas où l'on veut étudier une séparation moléculaire, les deux évaporateurs sont alimentés en solvant.

En haut de colonne, on mesure la concentration en espèce A en fonction du temps et on peut ainsi suivre la courbe de percée : lorsque la concentration en espèce A en sortie de colonne devient voisine de la concentration en espèce A à l'entrée de la colonne, l'adsorbant est saturé. On peut exprimer les résultats par la capacité d'adsorption à la fuite, ici prise à 1 % de la concentration d'entrée et à la saturation.

A- La première expérience concerne l'adsorption de toluène à deux pressions partielles, en comparaison avec un charbon actif de type AC40, préparé par activation physique (surface BET 1.105 $m^2$/g ; volume poreux par adsorption de $N_2$ 0,54 $cm^3$/g ; volume poreux par adsorption de toluène 0,50 $cm^3$/g; diamètre moyen mesuré par DFT 18-20 Å)

Le débit total de gaz choisi est de 26 NI/ h et la température d'adsorption de 22°C.

| Type d'adsorbant testé | MTS 25 aggloméré | MTS 35 aggloméré | AC 40 |
|---|---|---|---|
| Capacité à la fuite (%)   P/Ps = 0,32 | 31 | 26,3 | 33,6 |
| Capacité à la fuite (%)   P/Ps = 0,5 | 36 | 35,2 | 34,3 |

Les comportements en adsorption du charbon actif testé et des adsorbants selon l'invention sont comparables; on constate également que la capacité d'adsorption des adsorbants selon l'invention n'est pas affectée par la présence du liant inerte et est comparable à la capacité d'adsorption de solide mésoporeux non aggloméré présentée dans la littérature.

B- On s'intéresse maintenant au comportement en adsorption des adsorbants testés ci-dessus pour des phases gazeuses contenant de l'eau à la pression partielle de 0,4, le reste étant inchangé.

| Type d'adsorbant testé | MTS 25 aggloméré | MTS 35 aggloméré | AC 40 |
|---|---|---|---|
| Capacité à la fuite (%)   P/Ps = 0,32 | 30 | 26 | 33,1 |

La présence d'eau ne perturbe significativement l'adsorption du toluène sur aucun des trois adsorbants testés.

On confirme donc que les solides de type MTS pourraient être de bons candidats à l'élimination de VOC aromatiques car ils présentent un fort volume poreux nettement plus élevé que celui des zéolites hydrophobes de structure Y ou ZSM 5, tout en étant comme elles de nature silicique.

Exemple 5 (capacité de désorption/régénération de divers adsorbants)

Cet exemple traite de la régénération des adsorbants précédemment testés : lorsque la saturation de ceux-ci est obtenue, on effectue une désorption à l'azote sous un courant de 26 Nl/ h pendant 16 heures.

On pèse alors les trois adsorbants et on en déduit le résiduel en toluène sur chacun d'eux non désorbé ; cette valeur donne une indication de leur capacité de régénération.

| Type d'adsorbant testé | MTS 25 aggloméré | MTS 35 aggloméré | AC 40 |
|---|---|---|---|
| Résiduel (% )   P/Ps = 0,32 | 1 | 1,4 | 25 |
| Résiduel (% )   P/Ps = 0,5 | 1,6 | 1,7 | 23,2 |
| Résiduel (% )   P/Ps = 0,32 + eau | 1 | 2,4 | 22,62 |

Il apparaît clairement que les adsorbants selon l'invention se régénèrent beaucoup mieux que le charbon actif, ce que la demanderesse pense être dû à une absence quasi totale de microporosité des MTS ; dans les conditions utilisées, le charbon testé ne désorbe qu'environ 30% de la quantité de toluène adsorbée, ce qui aura pour conséquence qu'au cours de cycles adsorption/désorption ultérieurs son efficacité en termes de capacité de travail utile sera très fortement diminuée à la différence des adsorbants selon l'invention.

Exemple 6 (adsorption/désorption de composé oxygéné)

On compare ici l'adsorption de la méthyléthylcétone (MEK), composé oxygéné sur l'adsorbant selon l'invention MTS 25 et sur du charbon actif AC 40.

On utilise le montage d'adsorption décrit à l'exemple 4 et l'on fait passer au travers de la colonne :

soit un flux gazeux constitué d'azote sec et de MEK (pression partielle en MEK : 0,42),
soit un flux gazeux constitué d'azote, de MEK et d'eau (pression partielle en MEK : 0,42 ; pression partielle en eau : 0,4)

ce qui représente dans les 2 cas une quantité entraînée de MEK de l'ordre de 3,8 g/h. On réalise un premier cycle comprenant une adsorption jusqu'à saturation suivie d'une désorption sous azote (Q = 26 Nl/ h ) puis un second cycle comprenant seulement l'adsorption jusqu'à saturation.

Les capacités à la fuite obtenues à l'issue de l'adsorption des 1er et 2nd cycles sont réunies dans le tableau ci-dessous :

| Type d'adsorbant testé | MTS 25 aggloméré | AC 40 |
|---|---|---|
| Capacité à la fuite (MEK seule ) 1er cycle (%) | 30,3 | 30,3 |
| Capacité à la fuite (MEK seule ) 2nd cycle (%) | 23 | 7,7 |
| Capacité à la fuite (MEK + eau) 1er cycle (%) | 36 | |
| Capacité à la fuite (MEK + eau ) 2nd cycle (%) | 21 | |

Pour l'adsorption initiale, on constate un comportement très voisin des adsorbants mais une capacité de régénération du MTS supérieure à celle du charbon actif. En renouvelant l'expérience sur 40 cycles d'adsorption/ désorption, on mesure la capacité à la fuite des 2 adsorbants au bout de ces 40 cycles : 20,1% pour le MTS 25 et seulement 7,5% pour le charbon actif ; on conclut donc que l'adsorbant selon l'invention a une bien meilleure capacité de travail utile que celle du charbon actif.

Exemple 7 (séparation de 2 composés à point d'ébullition différents)

On compare ici l'adsorption de 2 composés ayant des points d'ébullition différents avec l'adsorbant selon l'invention MTS 25 et avec du charbon actif AC 40.

On utilise le montage d'adsorption décrit à l'exemple 4 et l'on fait passer au travers de la colonne un flux gazeux de débit total égal à 17 Nl/h constitué d'azote, de toluène (1,22 g/h) et d'éthylbenzène (0,456 g/h) dont les points d'ébullition sont respectivement de 110°C et 136 °C suivie d'une désorption au même débit sous azote pur qui est poursuivie jusqu'à ce que P/Ps = 0 ,025 ; on suit la concentration des composés en sortie de colonne par chromatographie en phase gazeuse (CPG) et on constate que le toluène perce le 1er, suivi de l'éthylbenzène avec une concentration relative C/Co en toluène supérieure à 1, signe qu'il y a effectivement déplacement d'une molécule par l'autre. L'expérience est menée sur le MTS 25 et sur le charbon AC 40.

On exprime la capacité d'adsorption à la fuite en toluène, composé le moins adsorbé, ainsi que la quantité de toluène produite par le système pour 100 grammes d'adsorbant et pour une teneur en éthylbenzène (EtBz) soit inférieure à 0,1% soit inférieure à 0,5 % .

| Type d'adsorbant testé | | MTS 25 aggloméré | AC 40 |
| --- | --- | --- | --- |
| Capacité d'adsorption en toluène à la fuite | (%) | 30,3 | 25,3 |
| Quantité de toluène produite (< 0,1% en EtBz) | (g) | 26 | 9,2 |
| Quantité de toluène produite (<0,5% en EtBz) | (g) | 27,2 | 18,4 |

Il apparaît clairement que les adsorbants selon l'invention sont capables de séparer des molécules de point d'ébullition différent de manière plus efficace qu'un charbon actif.

Exemple 8

On réalise dans cet exemple un test de type VSA pour Vacuum Swing Adsorption dans les conditions suivantes :

- 1 colonne d'adsorption de diamètre 5 cm et de hauteur 1,5 m remplie de 1.022 g de MTS 35 issu de l'exemple 1 sous forme d'extrudés de 1,6 mm de diamètre
- épuration d'air contenant 28 g/m³ d'un mélange de 50 % en poids d'acétate d'éthyle, 42% d'éthanol et 8 % d'isopropanol.

*Conditions d'adsorption*

Pression atmosphérique
Durée de passage du flux gazeux : 30 minutes de bas en haut
Vitesse en fût vide : 14 cm/s
Débit du flux gazeux : 1 m3/h

*Conditions de désorption*

Pression : 5,9 kPa
Durée : 30 minutes de haut en bas
Débit de purge = 60 l/h

Chaque cycle dure donc 1 heure ; on mesure la concentration en sortie en s'assurant que le front est bien stabilisé dans la colonne, ce qui correspond à un fonctionnement stationnaire au cours des cycles. La concentration (stable au cours du temps) mesurée en sortie est inférieure à 0,15 g/m³.

A titre comparatif, on pratique le même test VSA en remplaçant le MTS de l'exemple 1 par un charbon actif commercialisé par la demanderesse sous la dénomination SA 1831, de surface BET 1.320 m²/g et de volume poreux 0,85 cm³/g (mesuré par adsorption de $N_2$ à 77°K (< 100 Å)) et de distribution de taille de pores larges (10-200 Å).

Pour les 2 adsorbants testés (le MTS et le charbon actif), la capacité utile de travail est voisine de 7,5 g de VOC /l d'adsorbant , ce qui montre la capacité de l'adsorbant à fonctionner de manière aussi performante qu'un charbon actif sans présenter les inconvénients dus à l'inflammabilité.

Exemple 9 (préparation d'un solide inorganique mésoporeux à distribution étroite et calibrée des mésopores à partir de silice précipitée)

Dans 310 g d'eau, on dissout 29,4 g de NORAMIUM MS 50 puis 8,4 g de soude. Après agitation pour dissoudre tous les ingrédients, on disperse dans le mélange 31 g (équivalent anhydre) de silice précipitée commercialisée par la demanderesse sous la dénomination LEVILITE de surface BET 627 $m^2$/g et de volume poreux 0,73 $cm^3$/g (mesuré par adsorption de $N_2$ à 77°K (10-500 Å)) puis on le porte à une température d'environ 100 °C, température à laquelle on maintient le mélange pendant 16 h sous légère agitation. On filtre et lave avec 6 l d'eau puis sèche le solide obtenu qui présente, après un traitement thermique de 2 h à 550 °C sous air les caractéristiques suivantes :

| | |
|---|---|
| Surface BET | 1.100 $m^2$/g |
| Volume poreux | 0,73 $m^3$/g |
| (mesuré par adsorption de $N_2$ à 77°K (20-100 Å)) | |
| Diamètre moyen de pores (BJH) | 28 Å |

90 % du volume mésoporeux est compris entre 23 et 33 Å.

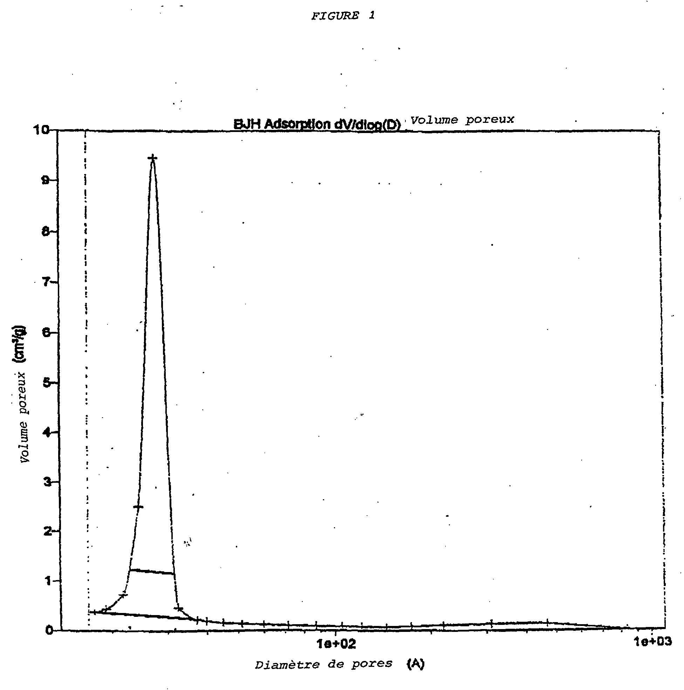

La courbe de distribution poreuse obtenue par exploitation BJH des isothermes d'adsorption/désorption de $N_2$ à 77 °K correspond à la figure 1.

Exemple 10

Dans 310 g d'eau, on dissout 29,4 g de NORAMIUM MS 50 puis 8,4 g de soude. Après agitation pour dissoudre tous les ingrédients, on disperse dans le milieu 31 g ( équivalent anhydre ) de silice précipitée commercialisée par la société GRACE sous la dénomination SILOPOL 2104 de surface BET 322 $m^2$/g et de volume poreux 1,6 $cm^3$/g (mesuré par adsorption de $N_2$ à 77°K (10-500 Å)) puis on porte a une température de 100 °C, température à laquelle on maintient le mélange pendant 16 h sous légère agitation. On filtre et lave avec 6 l d'eau puis on sèche le solide obtenu qui présente après un traitement thermique de 2 h à 550°C sous air les caractéristiques suivantes :

| | |
|---|---|
| Surface BET($m^2$/g) | 1.114 $m^2$/g |
| Volume poreux (20-100 Å) | 1,04 $cm^3$/g |
| (mesuré par adsorption de $N_2$ à 77°K (20-100 Å)) | |
| Diamètre moyen de pores (BJH) | 33 Å |

90% de la distribution poreuse est comprise entre 28 et 38 Å

Exemple 11

La poudre obtenue à l'exemple 10 est mise en forme par agglomération en mélangeant avec un liant argileux et un agent rétenteur d'eau tel que la carboxyméthylcellulose destiné à faciliter la mise en forme. La pâte est ensuite extrudée et la teneur en liant exprimée comme le rapport entre poids de liant et poids total (liant + MTS) est de 20%.

Les extrudés ainsi obtenus sont cassés pour que leur longueur moyenne soit égale à environ 4 à 5 mm puis ils sont séchés et calcinés à 550°C pendant 2 h sous air. Les principales caractéristiques des adsorbants selon l'invention sont indiquées ci-dessous :

| Type de MTS | MTS 35 |
|---|---|
| Volume poreux par adsorption de toluène (25 °C-P/ Ps = 0,5) ($cm^3$/g) | 0,71 |
| Surface BET ($m^2$/g) | 900 |
| Volume poreux par adsorption de $N_2$ à 77°K (20-100 Å) ($cm^3$/g) | 0,85 |
| Diamètre moyen par adsorption de $N_2$ à 77°K (DFT) (Å) | 33 |

**Revendications**

1.  Solide inorganique susceptible d'adsorber plus de 7,5 %, et de préférence plus de 10 %, en poids de toluène sous une pression relative de 0,5 à 25°C, présentant un volume mésoporeux supérieur ou égal à 0,09 $cm^3$/g, dont au moins 90 % du volume poreux total a un diamètre supérieur à 20 Å et dont au moins 90 % de la porosité est distribuée autour du diamètre moyen à plus ou moins 5 Å, de granulométrie moyenne en général comprise entre 1 et 10 mm comprenant :

* de 50 à 95 parties en poids (comptées en équivalent calciné) d'un solide inorganique poreux dénommé MTS susceptible d'adsorber plus de 15 % en poids de toluène sous une pression relative de 0,5 à 25°C, présentant un volume mésoporeux supérieur ou égal à 0,18 cm$^3$/g, dont au moins 90 % du volume poreux total a un diamètre supérieur à 20 Å et dont au moins 90 % de la porosité est distribuée autour du diamètre moyen à plus ou moins 5 Å,
* de 50 à 5 % parties en poids d'un liant inerte (au sens de l'adsorption).

2. Solide inorganique à distribution mésoporeuse étroite et calibrée selon la revendication 1 **caractérisé en ce qu'**il a une composition chimique que l'on peut représenter empiriquement par la formule :

$$(Si_x \, Al_{(1-x)} \, H_{(1-x)})O_2 \quad \text{avec } 0 \leq 1-x \leq 0,3.$$

3. Procédé de préparation d'un solide tel que défini à la revendication 2

* par cristallisation d'un mélange réactionnel contenant une source de silice, un agent mobilisateur de la silice comme la soude, éventuellement un peu d'aluminium, un tensioactif agissant comme agent calibreur de pores, un solvant, et éventuellement un agent gonflant qui se solubilise dans les micelles,
* puis filtration, lavage et séchage et calcination du solide inorganique pulvérulent obtenu,
* puis agglomération dudit solide pulvérulent en présence d'eau par exemple par extrusion ou granulation avec un liant (inerte au sens de l'adsorption), choisi notamment parmi les argiles telles que montmorillonite, attapulgite, kaolinite, sépiolite, les silices, les oxyde de titane, de zirconium et
* calcination à une température d'au moins 400 °C.

4. Procédé de séparation des composants d'un mélange constitué d'au moins 2 composés moléculaires gazeux, comprenant les étapes suivantes fonctionnant alternativement :

a/ faire passer ledit mélange gazeux dans une zone d'adsorption contenant un solide inorganique à distribution mésoporeuse étroite et calibrée tel que défini à la revendication 1 ou 2, et récupérer soit le composé ayant le plus bas point d'ébullition soit un mélange gazeux enrichi en composé ayant le plus bas point d'ébullition en sortie de ladite zone d'adsorption,
b/ désorber les composés adsorbés dans la zone d'adsorption,
c/ régénérer la zone d'adsorption de manière à lui restaurer sa capacité d'adsorption.

5. Procédé selon la revendication 4, **caractérisé en ce que** l'étape de régénération c/ est réalisée par des moyens de vide (aspiration), par purge de la zone d'adsorption avec un ou plusieurs gaz inerte(s) et/ou avec le composé gazeux obtenue en sortie de la zone d'adsorption, par augmentation de température ou par combinaison des régénérations par aspiration, par purge et/ou par augmentation de température.

6. Procédé selon la revendication 4 de type PSA ou VSA, **caractérisé en ce que** l'étape de désorption b/ est effectuée par abaissement de la pression partielle en composés adsorbés au sein de ladite zone d'adsorption suivie d'une remontée en pression de ladite zone d'adsorption par introduction d'un courant du composé à bas point d'ébullition ou du mélange gazeux enrichi en composé à bas point d'ébullition, à contre-courant ou à co-courant (étape c/).

7. Procédé selon la revendication 4 de type TSA, **caractérisé en ce que** l'étape de désorption b/ est effectuée par augmentation de la température de la zone d'adsorption par rapport à température de l'étape a/.

8. Procédé selon la revendication 4 de type PTSA, **caractérisé en ce que** l'étape de désorption b/ est effectuée par augmentation de la température de la zone d'adsorption par rapport à la température de l'étape a/ et par abaissement de la pression partielle en composés adsorbés au sein de ladite zone d'adsorption suivie d'une remontée en pression de ladite zone d'adsorption par introduction d'un courant du composé à bas point d'ébullition ou du mélange gazeux enrichi en composé à bas point d'ébullition, à contre-courant ou à co-courant (étape c/).

9. Procédé selon les revendications 4 à 8 dans lequel le composé à bas point d'ébullition est de l'air sec ou humide.

10. Procédé selon la revendication 4 à 8 dans lequel le composé à bas point d'ébullition est un hydrocarbure, particulièrement un hydrocarbure oxygéné et encore plus spécifiquement un hydrocarbure appartenant au groupe des cétones, des aldéhydes, des acides ou des alcools.

**11.** Procédé selon la revendication 4 à 8 dans lequel le composé à plus haut point d'ébullition est un hydrocarbure, particulièrement un hydrocarbure oxygéné et encore plus spécifiquement un hydrocarbure appartenant au groupe des cétones, des aldéhydes, des acides ou des alcools.

FIGURE 1

**Office européen des brevets**

# RAPPORT DE RECHERCHE EUROPEENNE

Numéro de la demande

EP 01 40 0651

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | US 5 583 277 A (G.H.KUEHL) 10 décembre 1996 (1996-12-10) * colonne 15, ligne 26 - ligne 47; tableau 1 * * colonne 9, ligne 3 - ligne 9 * --- | 1,2,4 | B01J20/10 B01J20/18 B01J20/28 B01D53/04 |
| A | US 5 378 440 A (J.A. HERBST) 3 janvier 1995 (1995-01-03) * colonne 23, ligne 40 - ligne 48; revendications 1,2 * * colonne 24, ligne 17 - ligne 35 * * colonne 14, ligne 61 - colonne 15, ligne 40 * * colonne 29; exemple 1 * --- | 1-3 | |
| D,A | S. NAMBA: "pressure swing adsorption of organic solvent vapors on mesoporous silica molecular sieves" STUDIES IN SURFACE SCIENCE AND CATALYSIS, vol. 105, 1997, pages 1891-1898, XP000974529 * page 1892 * --- | 1,4 | DOMAINES TECHNIQUES RECHERCHES (Int.Cl.7) B01J B01D |
| A | EP 0 744 210 A (THE BOC GROUP) 27 novembre 1996 (1996-11-27) * revendication 1 * ------ | | |

Le présent rapport a été établi pour toutes les revendications

| Lieu de la recherche | Date d'achèvement de la recherche | Examinateur |
|---|---|---|
| LA HAYE | 17 juillet 2001 | Hilgenga, K |

**ANNEXE AU RAPPORT DE RECHERCHE EUROPEENNE
RELATIF A LA DEMANDE DE BREVET EUROPEEN NO.**

EP 01 40 0651

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-07-2001

| Document brevet cité au rapport de recherche | | Date de publication | Membre(s) de la famille de brevet(s) | | | Date de publication |
|---|---|---|---|---|---|---|
| US 5583277 | A | 10-12-1996 | AU | 684673 | B | 18-12-1997 |
| | | | AU | 3508295 | A | 26-04-1996 |
| | | | CA | 2200946 | A | 11-04-1996 |
| | | | EP | 0785906 | A | 30-07-1997 |
| | | | JP | 10506834 | T | 07-07-1998 |
| | | | WO | 9610537 | A | 11-04-1996 |
| US 5378440 | A | 03-01-1995 | US | 5220101 | A | 15-06-1993 |
| | | | US | 5098684 | A | 24-03-1992 |
| | | | US | 5102643 | A | 07-04-1992 |
| | | | US | 5057296 | A | 15-10-1991 |
| | | | AU | 644136 | B | 02-12-1993 |
| | | | AU | 7214891 | A | 21-08-1991 |
| | | | CA | 2072352 | A | 26-07-1991 |
| | | | CS | 9101669 | A | 17-06-1992 |
| | | | DE | 69106121 | D | 02-02-1995 |
| | | | DE | 69106121 | T | 04-05-1995 |
| | | | DK | 512026 | T | 20-03-1995 |
| | | | EP | 0512026 | A | 11-11-1992 |
| | | | ES | 2072602 | T | 16-07-1995 |
| | | | JP | 5503499 | T | 10-06-1993 |
| | | | KR | 172612 | B | 18-02-1999 |
| | | | MX | 168309 | B | 17-05-1993 |
| | | | SK | 280860 | B | 14-08-2000 |
| | | | WO | 9111390 | A | 08-08-1991 |
| | | | US | 5370785 | A | 06-12-1994 |
| | | | US | 5145816 | A | 08-09-1992 |
| | | | US | 5156829 | A | 20-10-1992 |
| | | | US | 5104515 | A | 14-04-1992 |
| | | | US | 5183561 | A | 02-02-1993 |
| | | | US | 5837639 | A | 17-11-1998 |
| | | | US | 5264203 | A | 23-11-1993 |
| | | | US | 5238676 | A | 24-08-1993 |
| | | | US | 5258114 | A | 02-11-1993 |
| | | | US | 5246689 | A | 21-09-1993 |
| | | | US | 5211934 | A | 18-05-1993 |
| | | | US | 5215737 | A | 01-06-1993 |
| | | | US | 5196633 | A | 23-03-1993 |
| | | | US | 5200058 | A | 06-04-1993 |
| | | | US | 5304363 | A | 19-04-1994 |
| | | | US | 5250282 | A | 05-10-1993 |
| | | | US | 5334368 | A | 02-08-1994 |
| | | | ZA | 9104162 | A | 24-02-1993 |
| | | | US | 5108725 | A | 28-04-1992 |
| | | | US | 5110572 | A | 05-05-1992 |
| | | | US | 5112589 | A | 12-05-1992 |

EPO FORM P0460

Pour tout renseignement concernant cette annexe : voir Journal Officiel de l'Office européen des brevets, No. 12/82

**ANNEXE AU RAPPORT DE RECHERCHE EUROPEENNE
RELATIF A LA DEMANDE DE BREVET EUROPEEN NO.**

EP 01 40 0651

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-07-2001

| Document brevet cité au rapport de recherche | Date de publication | Membre(s) de la famille de brevet(s) | | Date de publication |
|---|---|---|---|---|
| US 5378440 A | | US | 5198203 A | 30-03-1993 |
| | | US | 5174888 A | 29-12-1992 |
| | | US | 5300277 A | 05-04-1994 |
| | | CN | 1062308 A,B | 01-07-1992 |
| | | CN | 1136977 A | 04-12-1996 |
| EP 744210 A | 27-11-1996 | AUCUN | | |

EPO FORM P0460

Pour tout renseignement concernant cette annexe : voir Journal Officiel de l'Office européen des brevets, No.12/82